# EUROPEAN PATENT SPECIFICATION

(11) **EP 2 439 989 B1**
(45) Date of publication and mention of the grant of the patent: **27.03.2013**
(21) Application number: 11008103.1
(22) Date of filing: 06.10.2011
(51) Int. Cl.: H04W 60/00, H04W 4/00, H04W 8/26, H04W 4/02

(54) **Method of handling a network attach procedure for a machine-type-communication (MTC) device selecting a new PLMN and related MTC device**
Verfahren zur Abwicklung einer Netzwerk-Attachprozedur für ein MTC Gerät bei Auswahl eines neuen PLMN und zugehöriges MTC Gerät
Procédé de rattachement à un réseau d'un dispositif de communication de type machine (MTC) qui sélectionne un nouveau PLMN et dispositif de communication de type machine (MTC) associé

(30) Priority: 07.10.2010 US 390620 P
(43) Date of publication of application: 11.04.2012
(73) Proprietor: HTC Corporation, Taoyuan County 330 (TW)
(72) Inventor: Tiwari, Kundan, Taoyuan City Taoyuan County 330 (TW)
(74) Representative: Emde, Eric

(56) References cited:
- EP-A2- 2 385 714
- 3GPP TS 23 401 V10.1.0 (2010-09): "3GPP TS 23.401 V10.1.0 (2010-09); 3rd Generation Partnership Project; Technical Specification Group Services and System Aspects; General Packet Radio Service (GPRS) enhancements for Evolved Universal Terrestrial Radio Access Network (E-UTRAN) access (Release 10); pages 1, 70-72 and 80", 3GPP TS 23.401 V10.1.0 (2010-09), [Online] 29 September 2010 (2010-09-29), XP002667990, Retrieved from the Internet: URL:http://www.3gpp.org/ftp/Specs/html-inf o/23401.htm>
- VODAFONE: "S2-104258; Change Request CR 1680 to TS 23.401; Signalling IMSI at Attach/PLMN change (TR 23.888, 7.1a, reference 6.33.2d)", 3GPP DRAFT; S2-104258, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 2 September 2010 (2010-09-02), pages 1-12, XP050459027, [retrieved on 2010-09-02]
- NOKIA CORPORATION ET AL: "Presence Privacy of MTC Devices", 3GPP DRAFT; S3-101299-SIMTC_PRESENCE_PRIVACY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sorrento; 20101115, 8 November 2010 (2010-11-08), XP050526145, [retrieved on 2010-11-08]

## Description

### 1. Field of the Invention

The application relates to a method and a related machine type communication, MTC, device used in a wireless communication system, and more particularly, to a method of handling an attach procedure by a machine type communication, MTC, device and a related machine type communication, MTC, device in a wireless communication system.

### 2. Description of the Prior Art

Machine-type communication (MTC) is one type of data communication including one or more entities not requiring human interactions. That is, the MTC refers to the concept of communication based on a network such as the existing GERAN, UMTS, long-term evolution (LTE), or the like used by a machine device instead of a mobile station (MS) used by a user. The machine device used in the MTC can be called an MTC device. There are various MTC devices such as a vending machine, a machine of measuring a water level at a dam, etc. That is, the MTC is widely applicable in various fields. The MTC device has features different from that of a typical MS. Therefore, a service optimized to the MTC may differ from a service optimized to human-to-human communication. In comparison with a current mobile network communication service, the MTC can be characterized as a different market scenario, data communication, less costs and efforts, a potentially great number of MSs for communication, wide service areas, low traffic per MS, etc.

Meanwhile, the number of MTC devices is expected to be much greater than the number of legacy devices, and a probability of performing operations of the plurality of MTC devices simultaneously is high due to a feature of a typical machine-to-machine (M2M) service. M2M communication (also referred to as "machine-type communications" or "MTC") may be used in a variety of areas. In the area of security, M2M communication may be used in surveillance systems, in backup of telephone landlines, in the control of physical accesses (e.g. to buildings), and in car/driver security. In the area of tracking and tracing, M2M communication may be used for fleet management, order management, Pay As You Drive (PAYD) applications, asset tracking, navigation, traffic information applications, road tolling, traffic optimization, and steering. In the area of payment systems, M2M communication may be used in point of sales, vending machines, customer loyalty applications, and gaming machines. In healthcare, M2M communication may be used for remotely monitoring vital signs, supporting the elderly or handicapped, in web access telemedicine points, and in remote diagnostics. In the area of remote maintenance/control, M2M communication may be used in programmable logic controllers (PLCs), sensors, lighting, pumps, valves, elevator control, vending machine control, and vehicle diagnostics. In the area of metering, M2M communication may be used in applications related to power, gas, water, heating, grid control, and industrial metering. Additionally, M2M communication based on machine type communication (MTC) technology may be used in areas such as customer service.

M2M communications may take advantage of deployed wireless networks based on Third Generation Partnership Project (3GPP) technologies such as Global System for Mobile Communications (GSM) , Universal Mobile Telecommunications System (UMTS), Long Term Evolution (LTE), Long Term Evolution Advanced (LTE-Advanced), and/or other technologies such as WiMAX (Worldwide Interoperability for Microwave Access) or those developed by the Institute for Institute of Electrical and Electronics Engineers (IEEE) and 3GPP2. M2M communications may use networks based on these technologies to deliver business solutions in a cost-effective manner. In a circumstance involving ubiquitous deployment of wireless networks, the availability of the wireless networks may facilitate and/or encourage the deployment and use of M2M WTRUs. Additionally, further enhancements to these technologies may provide additional opportunities for the deployment of M2M-based solutions.

To receive services, e.g. evolved packet system (EPS) services, the UE needs to register with the network. During a registration procedure, e. g. attach procedure, the UE may first send an "ATTACH REQUEST" message to a core network (e.g. MME) . The "ATTACH REQUEST" message includes an international mobile subscriber identity (IMSI), which is stored in a subscriber identity module (SIM) card inside the mobile device, e.g. UE. Because the IMSI uniquely addresses each subscriber, it is seen as critical information from a security point of view and its transmission clearly has to be avoided as much as possible. By spying on and monitoring the IMSI, eavesdropper may track a subscriber's location, movement, and activities. So the network allocates a temporary UE identity, for example a system architecture evolution (SAE) temporary mobile subscriber identity (S-TMSI) , to the UE and renews it frequently in order to reduce the use of IMSI.

A MTC device will perform an attach procedure when the MTC devices selects a PLMN which is not in the equivalent PLMN list of the registered PLMN. In this attach procedure, the MTC device shall always identifies itself with IMSI i.e. It always sends IMSI in mobile Identity parameter.

Since a mobile station (MS) is sending IMSI in this case, then Information Elements in ATTACH REQUEST Message related to the MS's temporary Identifier are not needed as the network will proceed with IMSI and ignore the temporary identifier. These Information Elements are redundant.

Further attention is drawn to the document 3GPP TS 23 401 V10.1.0 (2010-09): "3GPP TS 23.401 V10.1.0 (2010-09); 3rd Generation Partnership Project; Technical Specification Group Services and System Aspects; General Packet Radio Service (GPRS) enhancements for Evolved Universal Terrestrial Radio Access Network (E-UTRAN) access (Release 10); pages 1, 70-72 and 80", 3GPP TS 23.401 V10.1.0 (2010-09) which inter alia describes an attach procedure for a UE which is configured as a MTC device.

The document VODAFONE: "S2-104258; Change Request CR 1680 to TS 23.401; Signalling IMSI at Attach/PLMN change (TR 23.888, 7.1a, reference 6.33.2d)", 3GPP DRAFT; S2-104258, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 2 September 2010 describes an inter-PLMN change, wherein a M2M device is mandated to perform an attach procedure with an IMSI instead of using previously stored identification information.

### SUMMARY OF THE INVENTION

In accordance with the present invention, a method as set forth in claim 1, and a machine type communication, MTC, device as set forth in claim 4 are provided. Embodiments of the invention are claimed in the dependent claims.

These and other objectives of the present invention will no doubt become obvious to those of ordinary skill in the art after reading the following detailed description of the preferred embodiment that is illustrated in the various figures and drawings.

### Brief Description of the Drawings

FIG.1 illustrates an exemplary MTC ( (Machine Type Communication) architecture.

FIG.2 is a schematic diagram of an exemplary communication device.

FIG.3 is a flow chart of an exemplary process.

### Detailed Description

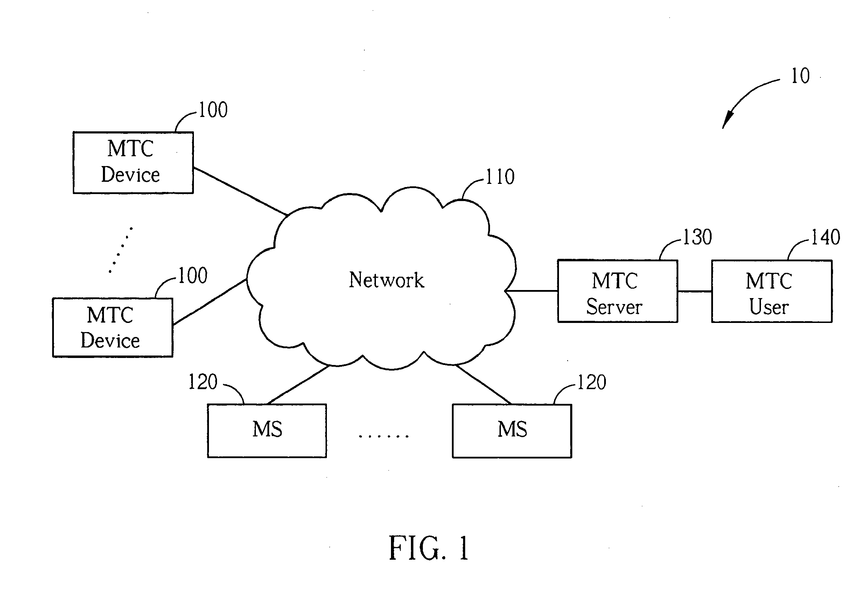

Please refer to FIG.1, which illustrates an exemplary MTC ( (Machine Type Communication) architecture of a wireless communication system 10. The wireless communication system 10 includes a plurality of MTC devices 100, a network 110, a plurality of mobile stations (MSs) 120, a MTC server 130 and a MTC user 140. The plurality MTC devices 100 and the plurality of MSs 120 are connected to the network 110. The MTC server 130 receives information of the MTC devices 100 through the network 110, and provides the information to the MTC user 140. The MTC server 130 is located outside of the network 110 or inside of the network 110 and managed by the network operator.

The network 110 may be referred as to Global System for Mobile Communications (GSM), Universal Mobile Telecommunications System (UMTS), GSM EDGE Radio Access Network (GERAN), Long Term Evolution (LTE), Long Term Evolution Advanced (LTE-Advanced), and/or other technologies such as WiMAX (Worldwide Interoperability for Microwave Access) or those developed by the Institute for Institute of Electrical and Electronics Engineers (IEEE). Please note that MTC devices 320 also can be referred as to user equipments (UEs) in a wireless communication system, which includes mobile phones, computer systems, etc.

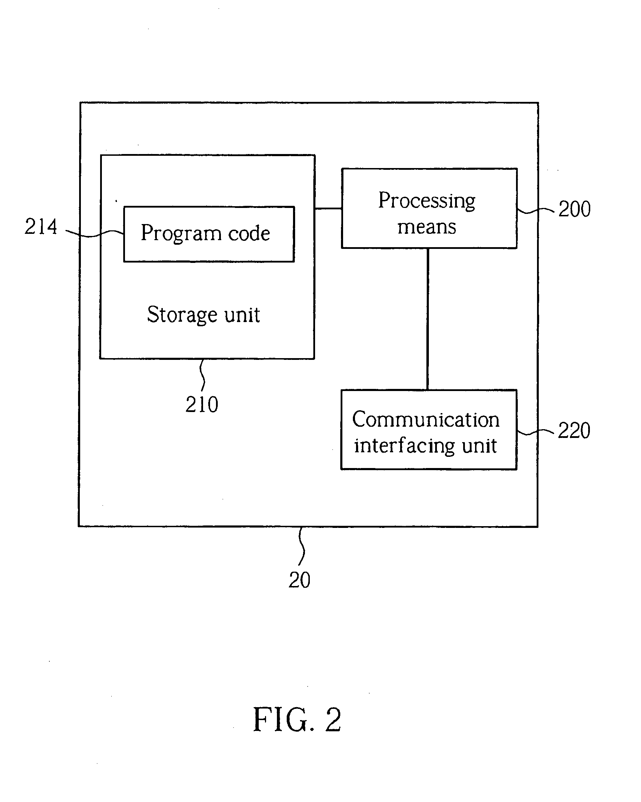

Please refer to FIG.2, which is a schematic diagram of an exemplary communication device 20. The communication device 20 can be the MTC devices 100, the network 110, the MSs 120 or the MTC sever 130 shown in FIG.1 and may include a processing means 200 such as a microprocessor or ASIC, a memory unit 210, and a communication interfacing unit 220. The memory unit 210 may be any data storage device that can store program code 214 for access by the processing means 200. Examples of the memory unit 410 include but are not limited to a subscriber identity module (SIM), read-only memory (ROM), random-access memory (RAM), CD-ROMs, magnetic tapes, floppy disks, and optical data storage devices. According to processing results of the processing means 200, the communication interfacing unit 220 can be a radio transceiver or a wire/logical link for communicating with the network 110.

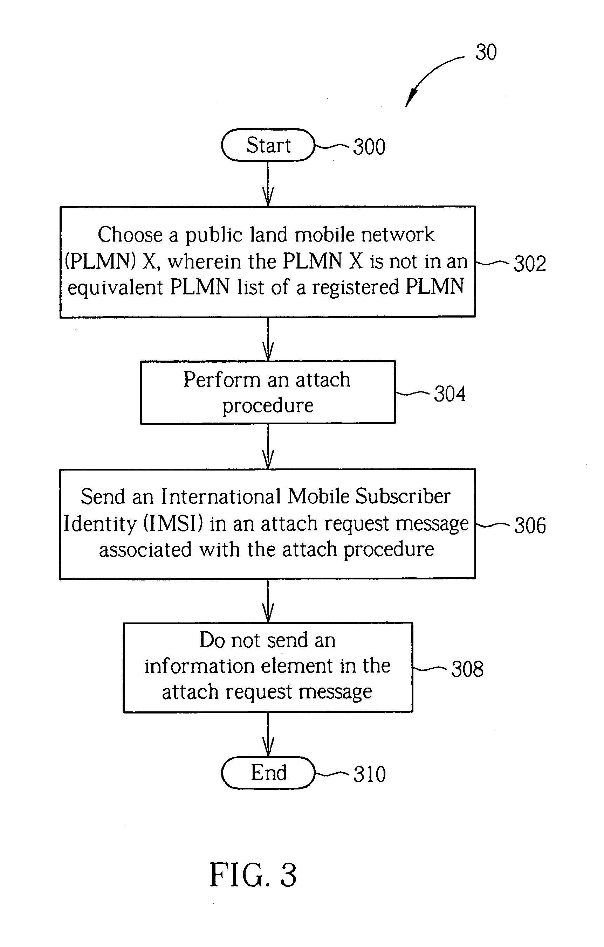

Please refer to FIG.3, which is a flow chart of an exemplary process 30. The process 30 is used for handling an attach procedure for a MTC device. Preferably, the MTC device could be one of the MTC devices 100 in wireless communication system 10. The process 30 can be compiled into the program code 214 and includes the following steps:

Step 300: Start.

Step 302: Choose a public land mobile network (PLMN) X, wherein the PLMN X is not in an equivalent PLMN list of registered PLMNs.

Step 304: Perform an attach procedure.

Step 306: Send an International Mobile Subscriber Identity (IMSI) in an attach request message associated with the attach procedure.

Step 308: Do not send an information element in the attach request message.

Step 310: End.

According to the process 30, the MTC device chooses the PLMN X other than the registered PLMN or the equivalent PLMN of the registered PLMN. The MTC device may support a S1 mode and Iu mode or Gb mode or both. In this situation, the MTC performs the attach procedure instead of RAU/TAU (Routing Area/tracking area) procedure. Then, the MTC device sends the IMSI in the attach request message. Since the MTC device identifies itself with the IMSI, the MTC device does not send the information element in the attach request message. The information element is related to a temporary identifier of a mobile station (MS) and/or information related to last location. Consequently, the MTC device no long send the information element in the attach request message when the MTC device choose the PLMN X other than the registered PLMN or the equivalent PLMN. This reduces redundant additional parameters which are not needed.

In some examples, the MTC device may camp on the network 110 such as E-UTRAN or UTRAN/GERAN. When the MTC device camps on E-UTRAN, the MTC device is prohibited to send the information element such as at least one of additional TMSI (Temporary Mobile Subscriber Identity) status, old location area identification, additional GUTI (Globally Unique Temporary UE Identity) and last visited registered TAI(Tracking Area Identity). When the MTC device camps on UTRAN/GERAN, the MTC device is prohibited to send the information element such as at least one of at least one of TMSI status, additional mobile identity and additional old routing area identification.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processing means 200 processes the program code 214 related to the abovementioned processes and the processed results can handle an attach procedure for a MTC device in the wireless communication system 10.

To sum up, when a MTC device chooses a PLMN other than the registered PLMN or an equivalent PLMN of the registered PLMN, the MTC device will perform an attach procedure. The MTC device identifies itself with IMSI in an attach request message associated with the attach procedure. So in the attach request message message, the MTC device is prohibited to send an information element related to temporary identifiers of the MS and/or information related to last location. Consequently, the redundant additional parameters can be reduced.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling an attach procedure by a machine type communication, MTC device in a wireless communication system, the method comprising:
performing the attach procedure with a public land mobile network, PLMN, wherein the PLMN is not in an equivalent PLMN list of the registered PLMN;
sending an International Mobile Subscriber Identity, IMSI, in an attach request message associated with the attach procedure, and
not sending an information element related to a plurality of temporary identifiers of the MTC device or related to a last location in the attach request message associated with the attach procedure.

2. The method of claim 1, wherein the information element is at least one of additional TMSI, Temporary Mobile Subscriber Identity, status, old location area identification, additional GUTI, Globally Unique Temporary UE Identity, and last visited registered TAI, Tracking Area Identity, in the attach request message when the MTC device camps on E-UTRAN, evolved UMTS Terrestrial Radio Access Network.

3. The method of claim 1, wherein the information element is at least one of TMSI status, additional mobile identity and additional old routing area identification in the attach request message when the MTC device camps on UTRAN, UMTS Terrestrial Radio Access Network, or GERAN, GSM EDGE Radio Access Network.

4. A machine type communication, MTC, device for handling an attach procedure in a wireless communication system, the MTC device comprising:
means for performing the attach procedure with a public land mobile network, PLMN, wherein the PLMN is not in an equivalent PLMN list of the registered PLMN;
means for sending an International Mobile Subscriber Identity, IMSI, in an attach request message associated with the attach procedure, and
means for not sending an information element related to a plurality of temporary identifiers of the MTC device or related to a last location in the attach request message associated with the attach procedure.

5. The communication device of claim 4, wherein the information element is at least one of additional TMSI, Temporary Mobile Subscriber Identity, status, old location area identification, additional GUTI, Globally Unique Temporary UE Identity, and last visited registered TAI, Tracking Area Identity, in the attach request message when the MTC device camps on E-UTRAN, evolved UMTS Terrestrial Radio Access Network.

6. The communication device of claim 4, wherein the information element is at least one of at least one of TMSI status, additional mobile identity and additional old routing area identification in the attach request message when the MTC device camps on UTRAN, UMTS Terrestrial Radio Access Network, or GERAN, GSM EDGE Radio Access Network.

## Patentansprüche

1. Verfahren zur Handhabung bzw. Abwicklung einer Attach-Prozedur durch eine Maschinentypkommunikations- bzw. MTC-Vorrichtung (MTC = Machine Type Communication) in einem drahtlosen Kommunikationssystem, wobei das Verfahren Folgendes aufweist:
Ausführen der Attach-Prozedur mit einem öffentlichen, landgestützten, mobilen Netzwerk bzw. PLMN (PLMN = Public Land Mobile Network), wobei das PLMN sich nicht in einer äquivalenten PLMN-Liste des registrierten PLMN befindet;
Senden einer internationalen Mobilteilnehmerkennung bzw. IMSI (IMSI = International Mobile Subscriber Identity) in einer Attach-Anfragenachricht, die mit der Attach-Prozedur assoziiert ist, und
Nicht Senden eines Informationselements zugehörig zu einer Vielzahl von temporären Kennungen der MTC-Vorrichtung oder zugehörig zu einer letzten Position in der Attach-Anfragenachricht, die mit der Attach-Prozedur assoziiert ist.

2. Verfahren gemäß Anspruch 1, wobei das Informationselement zumindest eine zusätzliche Temporäre Mobilteilnehmerkennung bzw. TMSI (TMSI = Temporary Mobile Subscriber Identity), der Status, die alte Positionsbereichsidentifizierung , eine zusätzliche globale, eindeutige, temporäre Teilnehmerendgerätekennung bzw. GUTI (GUTI = Globally Unique Temporary Identity) und die zuletzt besuchte, registrierte Trackingbereichskennung bzw. TAI (TAI = Tracking Area Identity) in der Attach-Anfragenachricht ist, wenn die MTC-Vorrichtung auf einem weiterentwickelten, landgestützten UMTS-Funkzugangsnetzwerk bzw. E-UTRAN (E-UTRAN = Evolved UMTS Terrestrial Radio Access Network) campt.

3. Verfahren gemäß Anspruch 1, wobei das Informationselement ein TMSI-Status und/oder eine zusätzliche Mobilkennung und/oder eine zusätzliche Kennung des alten Routingbereichs in der Attach-Anfragenachricht ist/sind, wenn die MTC-Vorrichtung auf einem UTRAN (UTRAN = UMTS Terrestrial Radio Access Network) oder GERAN (GERAN = GSM EDGE Radio Access Network) campt.

4. MTC-Vorrichtung zur Abwicklung einer Attach-Prozedur in einem drahtlosen Kommunikationssystem, wobei die MTC-Vorrichtung Folgendes aufweist:
Mittel zum Ausführen der Attach-Prozedur mit einem PLMN (PLMN = Public Land Mobile Network), wobei das PLMN sich nicht in einer äquivalenten PLMN-Liste des registrierten PLMN befindet;
Mittel zum Senden einer internationalen Mobilteilnehmerkennung bzw. IMSI (IMSI = International Mobile Subscriber Identity) in einer Attach-Anfragenachricht, die mit der Attach-Prozedur assoziiert ist, und
Mittel zum Nicht Senden eines Informationselements zugehörig zu einer Vielzahl von temporären Kennungen der MTC-Vorrichtung oder zugehörig zu einer letzten Position in der Attach-Anfragenachricht, die mit der Attach-Prozedur assoziiert ist.

5. Kommunikationsvorrichtung gemäß Anspruch 4, wobei das Informationselement zumindest eine zusätzliche Temporäre Mobilteilnehmerkennung bzw. TMSI (TMSI = Temporary Mobile Subscriber Identity), der Status, die alte Positionsbereichsidentifizierung, eine zusätzliche globale, eindeutige, temporäre Endgerätekennung bzw. GUTI (GUTI = Globally Unique Temporary Identity) und die zuletzt besuchte, registrierte Trackingbereichskennung bzw. TAI (TAI = Tracking Area Identity) in der Attach-Anfragenachricht ist, wenn die MTC-Vorrichtung auf einem weiterentwickelten, landgestützten UMTS-Funkzugangsnetzwerk bzw. E-UTRAN (E-UTRAN = Evolved UMTS Terrestrial Radio Access Network) campt.

6. Kommunikationsvorrichtung gemäß Anspruch 4, wobei das Informationselement ein TMSI-Status und/oder eine zusätzliche Mobilkennung und/oder eine zusätzliche Kennung des alten Routingbereichs in der Attach-Anfragenachricht ist/sind, wenn die MTC-Vorrichtung auf einem UTRAN (UTRAN = UMTS Terrestrial Radio Access Network) oder GERAN (GERAN = GSM EDGE Radio Access Network) campt.

## Revendications

1. Procédé pour gérer une procédure de rattachement par un dispositif de communication de type machine, MTC, dans un système de communication sans fil, le procédé comprenant les étapes suivantes :
réaliser la procédure de rattachement avec un réseau mobile terrestre public, PLMN, le PLMN n'étant pas dans une liste d'équivalents PLMN du PLMN enregistré ;
envoyer une Identité d'Abonné Mobile International, IMSI, dans un message de requête de rattachement associé à la procédure de rattachement, et
ne pas envoyer un élément d'information associé à une pluralité d'identificateurs temporaires du dispositif MTC ou associé à une dernière position, dans le message de requête de rattachement associé à la procédure de rattachement.

2. Procédé selon la revendication 1, dans lequel l'élément d'information est au moins un élément parmi un statut additionnel d'Identité d'Abonné Mobile Temporaire, TMSI, une identification de zone de position ancienne, une Identité d'UE Temporaire Unique Globalement, GUTI, additionnelle, et une Identité de Zone de Suivi, TAI, enregistrée comme dernière visitée, dans le message de requête de rattachement lorsque le dispositif MTC est installé sur un Réseau d'Accès Radio Terrestre UMTS évolué, E-UTRAN.

3. Procédé selon la revendication 1, dans lequel l'élément d'information est au moins un élément parmi un statut TMSI, une identité de mobile additionnelle et une identification d'ancienne zone de routage additionnelle dans le message de requête de rattachement lorsque le dispositif MTC est installé sur un Réseau d'Accès Radio Terrestre UMTS, UTRAN, ou un Réseau d'Accès Radio GSM EDGE, GERAN.

4. Dispositif de communication de type machine, MTC, pour gérer une procédure de rattachement dans un système de communication sans fil, le dispositif MTC comprenant :
des moyens pour réaliser la procédure de rattachement avec un réseau mobile terrestre public, PLMN, le PLMN n'étant pas dans une liste d'équivalents PLMN du PLMN enregistré ;
des moyens pour envoyer une Identité d'Abonné Mobile International, IMSI, dans un message de requête de rattachement associé à la procédure de rattachement, et
des moyens pour ne pas envoyer un élément d'information associé à une pluralité d'identificateurs temporaires du dispositif MTC ou associé à une dernière position, dans le message de requête de rattachement associé à la procédure de rattachement.

5. Dispositif de communication selon la revendication 4, dans lequel l'élément d'information est au moins un élément parmi un statut additionnel d'Identité d'Abonné Mobile Temporaire, TMSI, une identification de zone de position ancienne, une Identité d'UE Temporaire Unique Globalement, GUTI, additionnelle, et une Identité de Zone de Suivi, TAI, enregistrée comme dernière visitée, dans le message de requête de rattachement lorsque le dispositif MTC est installé sur un Réseau d'Accès Radio Terrestre UMTS évolué, E-UTRAN.

6. Dispositif de communication selon la revendication 4, dans lequel l'élément d'information est au moins un élément parmi un statut TMSI, une identité de mobile additionnelle et une identification d'ancienne zone de routage additionnelle dans le message de requête de rattachement lorsque le dispositif MTC est installé sur un Réseau d'Accès Radio Terrestre UMTS, UTRAN, ou un Réseau d'Accès Radio GSM EDGE, GERAN.
